# EUROPEAN PATENT APPLICATION

(11) **EP 4 778 622 A1**
(43) Date of publication of application: **22.07.2026**
(21) Application number: 25166214.4
(22) Date of filing: 26.03.2025
(51) Int. Cl.: B01J 8/08, B01J 8/10

(54) **ROTATING PACKED BED WITH INTERNAL SUPPORTS AND SPLIT CASING**

(30) Priority: 15.01.2025 IN 202541003461
(71) Applicant: Hindustan Petroleum Corporation Limited, Bengaluru, Karnataka 560067 (IN)
(72) Inventor: TOMPALA, Annaji Rajiv Kumar, 560067 Bengaluru (IN); KUNIYIL, Arun, 560067 Bengaluru (IN); KUMARAVELAN, Madan Kumar, 560067 Bengaluru (IN); SHANKAR, Jainendrakumar, 560067 Bengaluru (IN); DURGA, Kakara Vijaya, 560067 Bengaluru (IN)
(74) Representative: TRBL Intellectual Property

(57) **Abstract**

The present disclosure provides a rotating packed bed (RPB) system (100) with modified mechanical supports, casing (107) and a method (200) thereof. The rotating packed bed (RPB) system (100) includes a shaft (101) connected to a rotor (109) with a top plate (102) and a base plate (103) positioned parallel to each other and separated to accommodate a packing material (118). A casing (107) houses the rotor assembly (109) and is designed to split into a first portion (107-1) and a second portion (107-2), allowing horizontal pivoting. The first portion (107-1) is detachable for accessing the rotor assembly (109). The system (100) includes one or more stepped tie rods (106) positioned at the inner and outer diameters of the top plate (102) and the base plate (103) to connect them securely.

## Description

### TECHNICAL FIELD

Embodiments of the present disclosure generally relate to the rotating packed bed (hereinafter "RPB") technology. More particularly, the present disclosure relates to a rotating packed bed (RPB) system with modified mechanical structure embedded in a chemical processing unit, which addresses the mechanical limitations observed in conventional RPB systems.

### BACKGROUND

Background description includes information that may be useful in understanding the present disclosure. It is not an admission that any of the information provided herein is prior art or relevant to the presently claimed disclosure, or that any publication specifically or implicitly referenced is prior art.

Rotating packed bed (RPB) technology has gained prominence in gas-liquid separation, distillation processes and chemical reactions due to its high mass transfer rates and reduced equipment size. Said technology utilizes a rotating porous packed bed structure through which liquid and gas streams are routed to facilitate high interfacial area for gas liquid interaction, thus improving process outcomes significantly. Traditional RPB units comprise of various mechanical components to support the rotor assembly, which is integral to the system's reliable and durable operation.

In conventional designs, the multiple tie rods for connecting the top plate and base plate ensured the alignment of the plates are uniform and maintained sufficient volume for assembling the high surface area porous packing material between the two plates. During the operations & overhauling of the chemical processing unit, observations are noted which lead to believe that the conventional design would not be suitable for (a) RPBs where the distance between the top plate and base plate are significantly large (b) RPBs where in the outer radii is significantly higher (c) RPBs where in tensile strength of packing material may be lesser than conventional metals, etc. In order to overcome these limitations, it is required to re-design the RPB system with improved support system.

A prior art reference "CN 217,594,282 U" titled "Rotating packed bed of eight-four-inner-arc-ring supergravity machine" discloses the utility model that includes the eight-four inner arc ring supergravity machine rotating packed bed, which comprises a shell, a rotor, and a spraying pipe, the rotor is arranged in the shell, the rotor comprises a supporting disc, a supporting ring, a fixing screw rod, an eight-four inner arc ring, a steel wire ring and a conical shaft sleeve, the supporting ring is coaxially arranged on one side of the supporting disc, the supporting ring is connected with the supporting disc through the fixing screw rod and the spraying pipe is arranged on the supporting disc. A plurality of eight-four inner arc rings are arranged on the fixing screw, the inner sides and the outer sides of the eight-four inner arc rings are fixed through steel wire rings, a conical shaft sleeve is coaxially arranged in the middle of the side wall, close to one side of the supporting ring, of the supporting disc, a gas phase inlet is machined in the shell above the rotor, a gas phase outlet is machined in the shell on one side of the supporting ring, and the spraying pipe is installed in the gas phase outlet. A liquid phase outlet is processed on the shell below the rotor. According to the utility model, through the arrangement of the eight-four inner arc ring, a liquid phase and a gas phase can form good gas-liquid mixing in the eight-four inner arc ring when the rotor rotates, so that the gas can be better dispersed in the liquid phase.

Another prior art reference "US 9,446,996 B", titled "Reactor and alkylation process using the reactor", discloses a reactor for at least two liquid materials, comprising an enclosed reactor housing; a feeding tube having liquid material inlets for receiving corresponding liquid materials respectively; a distribution tube communicating with the feeding tube and extending into the reactor housing, the distribution tube being provided with a plurality of distribution holes in the region thereof extending into the reactor housing; a rotating bed in form of a hollow cylinder, which is disposed in the reactor housing via a fixing mechanism, thus dividing inner cavity of the reactor housing into a central area and an outer area, the rotating bed being capable of rotating driven by a driving mechanism; and a material outlet provided in a lower portion of the reactor housing for the outputting product after the reaction. The distribution tube extends into the central area spaced from the inner surface of the rotating bed, so that materials can enter into the outer area from the central area through the rotating bed and can be output via the material outlet.

Unlike any conventional rotors or motors where the setup is a solid material, the RPB is a porous block through which continuous liquid and gas streams are being passed through and the gas-liquid interaction occurs on the interfacial area of the packing. Considering that packing materials are highly porous and have less strength than conventional metals, structural changes are required to ensure the optimum packing and better mechanical strength to complete rotor system.

Also, RPBs operating under high pressures require very big casing vessels with larger thickness, thereby causing high material usage and difficulty in fabrication, transportation and maintenance. The cylindrical design also requires the removal of the complete assembly in case of carrying out overhauling / maintenance of any of the RPB components. Example-if the mechanical seal needs to be opened, then the di-assembly has to be done for gas outlet piping, liquid inlet piping, Gas-Liquid distributor, outer flange, cylindrical vessel, RPB assembly, shaft. Therefore, structural design changes are required for enabling ease of access to all components during inspection and repair.

To address the aforementioned challenges and limitations in the prior arts, there is a need for developing improved mechanical designs for the RPB system. Thus, there exists a dire need in the art, to design a rotating packed bed (RPB) system with improved mechanical supports and modified casing and a method thereof.

### SUMMARY OF THE INVENTION

Some of the objects of the present disclosure, which at least one embodiment herein satisfies are as listed herein below.

It is a general object of the present disclosure to provide a rotating packed bed (RPB) system with modified casing and a method thereof.

It is another object of the present disclosure to provide an RPB system with improved support system and modified casing and a method that provides enhanced mechanical stability between the top plate and the base plate and also provide easy access to during inspection and maintenance thereby reducing the equipment downtime.

It is another object of the present disclosure to provide an RPB system with modified casing and a method that provides a casing that can be split into two portions without complete dis-assembly of other mechanical components attached to the rotor, allows for horizontal pivoting to easily access internal components, facilitates maintenance and inspection.

It is another object of the present disclosure to provide one or more support rods positioned at the inner and outer diameters of the top plate and base plate to strengthen the connection between them and provide structural support.

It is another object of the present disclosure to provide improved and ease of fabrication of the RPB system that provides easier access to different components of the chemical processing unit.

Within the scope of this application, it is expressly envisaged that the various aspects, embodiments, examples, and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

The present disclosure provides a customized rotating packed bed (RPB) system embedded in a chemical processing unit and a method of implementing thereof.

According to an aspect of the present disclosure, the RPB system includes a casing that is implemented to enclose the top plate, the base plate, one or more inner support rods, and one or more outer support rods. The casing is split into two equal portions, which allows the top cover of the casing to pivot horizontally, providing easy access to the internal components of the RPB system. The horizontal split casing includes a gas inlet positioned at the top and a liquid outlet located at the lower side of the casing, ensure efficient flow of the gas-liquid mixture during operation. The liquid distributor inlet is also positioned for optimal distribution of liquid within the RPB system. The top view of the drawing shows the flat face connection by a circular plate, which ensures proper sealing and alignment of the top and bottom casings. The casing is adapted to access one or more internal components. The casing includes a curved surface at the process end, a first conical surface at the drive end, and a second conical surface at non-drive end. Further, the casing splits into a first and a second portion horizontal in equal portions and adapted to pivot horizontally the first portion of the casing thereby accessing one or more internal components of the RPB system.

According to yet another aspect of the present disclosure, the RPB system includes an inner support assembly with a cylindrical cage structure with one or more rods supported by circular rings for ensuring concentricity and further ensuring that the gas-liquid flow pattern is minimally affected. The inner support assembly maintains the alignment of the top and base plate in the central region and also maintains the distance between the top and base plate as per design thereby protecting packing material from over stress.

According to yet another aspect of the present disclosure, the RPB system includes the outer support assembly using one or more cylindrical rods assembled on the outer ring of the top plate and bottom plate which (a) ensure the concentricity and (b) have minimal interference with the gas-liquid flow pattern (c) which ensure that alignment of top and base plate in the outer region is maintained and (d) maintain the distance between the top and base plate as per design thereby protecting packing material from overstressed in the chemical processing unit.

According to yet another aspect of the present disclosure, the RPB system further includes one or more stepped tie rods which are symmetrically placed within the rotor to ensure better dynamic balance. One or more stepped tie rods have stepped diameters near the top plate and base plate which ensures the distance between the plates is maintained and hence thereby providing mechanical support to the packings from compression stress during the assembly with a higher diameter for giving more strength and ensuring concentricity.

According to yet another aspect of the present disclosure, the RPB system includes structural changes in the inner rotor support, the outer rotor support, and the stepped tie rods to ensure process separation efficiency is not affected and ensures that the gas between the top plate and base plate of the RPB is maintained, and the alignment of both the plates, support rings, high surface area porous packing material is also maintained.

Various objects, features, aspects, and advantages of the inventive subject matter will become more apparent from the following detailed description of preferred embodiments, along with the accompanying drawing figures in which like numerals represent like components.

### BRIEF DESCRIPTION OF DRAWINGS

The accompanying drawings, which are incorporated herein, and constitute a part of this disclosure, illustrate exemplary embodiments of the disclosed methods and systems in which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that the disclosure of such drawings includes the disclosure of electrical components, electronic components or circuitry commonly used to implement such components.
FIG. 1 illustrates an exemplary system block diagram of a rotating packed bed (RPB) system with a casing, in accordance with an exemplary embodiment of the present disclosure.
FIG. 2 illustrates an exemplary flow diagram that describes the step-wise illustration of a method of implementing the rotating packed bed system, in accordance with an embodiment of the present disclosure.
FIG. 3 illustrates an exemplary representation of a RPB system that includes a top plate and a base plate with one or more inner support rods and one or more outer support rods, in accordance with an embodiment of the present disclosure.
FIGs. 4 (A-B) illustrates exemplary representations of the stepped tie rods (A) and the strategic location of the stepped tie rods (B), in accordance with an embodiment of the present disclosure.
FIGs. 5 (A-C) illustrates exemplary representations of the horizontal split-open configuration of the casing, in accordance with an embodiment of the present disclosure.
FIG. 6 illustrates an exemplary representation of side view of RPB rotor assembly, in accordance with an embodiment of the present disclosure.
FIG. 7 illustrates an exemplary overview of the rotating packed bed (RPB) with its components, in accordance with an embodiment of the present disclosure.

Other objects, advantages, and novel features of the disclosure will become apparent from the following more detailed description of the present embodiment when taken in conjunction with the accompanying drawings.

### DETAILED DESCRIPTION

Various example embodiments will now be described more fully with reference to the accompanying drawings in which only some example embodiments are shown. Specific structural and functional details disclosed herein are merely representative for purposes of describing example embodiments. The present disclosure, however, may be embodied in many alternate forms and should not be construed as limited to only the example embodiments set forth herein.

Accordingly, while example embodiments of the disclosure are capable of various modifications and alternative forms, embodiments thereof are shown by way of example in the drawings and will herein be described in detail. It should be understood, however, that there is no intent to limit example embodiments of the present disclosure to the particular forms disclosed. On the contrary, example embodiments are to cover all modifications, equivalents, and alternatives falling within the scope of the disclosure. Like numbers refer to like elements throughout the description of the figures.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

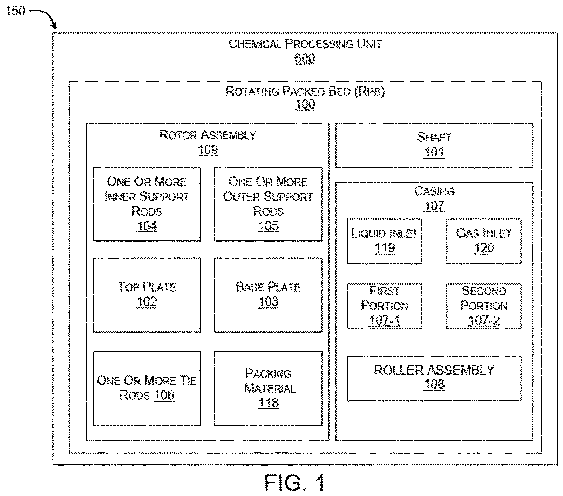

Hereinafter, exemplary embodiments of the present disclosure will be described with reference to the accompanying drawings FIGs. 1-7.

FIG. 1 illustrates an exemplary system block diagram (150) of a rotating packed bed (RPB) system (100) with the casing (107) (the terms "split casing", "modified casing", or "improved casing" can be used interchangeably hereinafter), in accordance with an exemplary embodiment of the present disclosure.

In an embodiment of the present disclosure, a rotating packed bed (RPB) system (100) (hereinafter terms "RPB system", "system", and "RPB assembly" used interchangeably) with the casing (107) is disclosed. The RPB system (100) includes various structural components that work together to facilitate chemical reactions or processes within the chemical processing unit (600). The RPB system (100) includes a shaft (101) connected to a rotor (109). The rotor (109) comprises of one or more sets of concentric rings of packing elements (118), the top plate (102) and the base plate (103), wherein the top plate (102) and the base plate (103) are positioned parallel to each other. The plates are separated to accommodate a packing material (118) that enables efficient chemical processing.

In an exemplary implementation of the embodiment, the packing material (118) refers to the internal structured or random elements placed between the top plate (102) and the base plate (103) and may include but not be limited to materials that enhance mass transfer or other chemical processes. The examples of the packing material (118) include but is not limited to, structured packing includes metallic or plastic mesh, corrugated sheets (metal or ceramic), or honeycomb structures, random packing includes Raschig rings, pall rings, saddles (ceramic or plastic), or Berl saddles, advanced material includes superficially modified surface, or catalyst bed.

The system includes a casing (107) designed to house rotor assembly (109) positioned within the casing. The casing (107) is constructed in a manner that enables it to split into two portions: a first portion (107-1) and a second portion (107-2). The first and second portions are equal in size and configured to pivot horizontally. The first portion (107-1) of the casing (107) is detachable, allowing convenient access to rotor assembly (109) positioned inside. This feature simplifies maintenance, inspection, or replacement of the internal components.

The rotating packed bed system (100) further includes a rotor assembly (109) one or more tie rods (106), which are strategically positioned at both the inner diameter and the outer diameter of rotor (109) including the top plate (102) and the base plate (103). The tie rods (106) are responsible for connecting the top plate (102) and the base plate (103) securely, ensuring structural integrity of packing material (118) during operation. The tie rods (106) may include but not be limited to materials with high tensile strength and durability, suitable for withstanding the stresses generated during the operation of the rotating packed bed system.

In such embodiment, the rotor (109), including the top plate (102) and the base plate (103), rotates around the shaft (101). The casing (107) provides a protective enclosure for the rotor assembly (109) and ensures that the operational environment is contained within the system. The design of the casing (107), with its pivoting and detachable first portion (107-1), facilitates ease of use and enhances the practicality of the system for industrial applications. The system is adaptable for various processes requiring efficient mass transfer, including but not limited to chemical absorption, distillation, chemical reactions or other similar applications.

In the exemplary implementation of the embodiment, the RPB system (100) is included within a chemical processing unit (600), which is an integrated unit implemented to perform one or more mass transfer process or chemical reactions or processes. The chemical processing unit (600) accommodates the RPB system (100) to enhance mass transfer rate or chemical mixing and reaction efficiency.

In the exemplary implementation of the embodiment, the one or more inner support rods (104) possess a cylindrical cage structure, offering both stability and flexibility for holding the internal packing material securely in place. One or more outer support rods (105) are also cylindrical in shape and positioned on the periphery surface of the top plate (102) and base plate (103), contributing to the overall stability of the system during operation.

In the exemplary implementation of the embodiment, the positioning of one or more tie rods (106) at a predetermined distance from each other ensures uniform distribution of mechanical forces across the packing material (118), enhancing durability and performance. Additionally, the one or more tie rods (106) may include stepped tie rods that feature a varying diameter, providing tailored mechanical properties to withstand different operational pressures and stresses.

In the exemplary implementation of the embodiment, the chemical reactions may include but not limited to, neutralization reaction, oxidation-reduction (redox) reactions, polymerization, or hydrolysis.

In the exemplary implementation of the embodiment, the chemical processes may include but not limited to, distillation, catalytic cracking, absorption, filtration, or evaporation. The chemical processing unit (600) may be adapted to include systems for conducting the aforementioned and other chemical reactions and processes, makes it versatile for applications in industries like petrochemicals, pharmaceuticals, food processing, and environmental engineering.

The RPB system (100) outlines the structural and functional elements of the RPB that highlight the interplay of various components such as the shaft (101), top plate (102), base plate (103), inner support rods (104), outer support rods (105), tie rods (106), and casing (107). The RPB system (100) serves as a critical component within a chemical processing unit (600), facilitating efficient chemical reactions or processes by leveraging the structural arrangement of its elements. The rotating packed bed system (100) contributes to its efficient functioning and robustness, making it suitable for handling demanding operational conditions. The specific arrangement of the components, including the shaft (101), rotor (109), casing (107), and tie rods (106), ensures optimal performance and ease of maintenance.

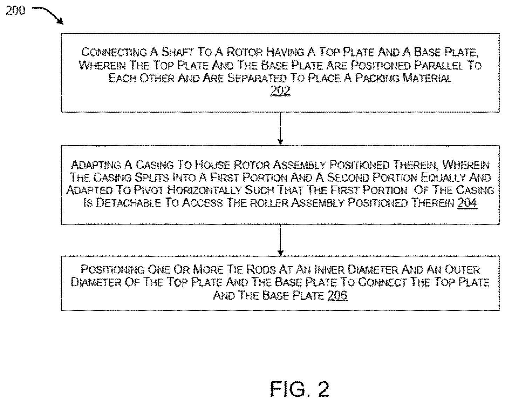

FIG. 2 illustrates an exemplary flow diagram (200) that describes the step-wise illustration of a method (200) of implementing the rotating packed bed system (100), in accordance with an embodiment of the present disclosure.

In another embodiment of the present disclosure, the method (200) for implementing a RPB system (200) with the casing (107) is disclosed. The method (200) related to the construction and operation of a rotating packed bed (RPB) system (100) with the casing (107). The rotating packed bed (RPB) (101), embedded within a chemical processing unit (600), involves several steps to implement an improved RPB system. The method (200) includes the following steps:
At block 202, a shaft (101) is connected to a rotor (109), where the rotor (109) includes a top plate (102) and a base plate (103). The top plate (102) and the base plate (103) are positioned parallel to each other and are spaced apart to place a packing material. The packing material facilitates specific operations within the rotor (109) and may include but not be limited to materials designed to enhance mass transfer or chemical reaction processes. The connection of the shaft (101) to the rotor (109) enables the rotor (109) to rotate during operation, provides the required dynamic environment for the system (200).

At block 204, a casing (107) is adapted to house the rotor assembly (109) positioned within it. The casing (107) is designed to split into two portions: a first portion (107-1) and a second portion (107-2), which are equal in size. The casing (107) is configured to pivot horizontally, allowing the first portion (107-1) to be detachable. This design facilitates easy access to the rotor assembly (109) for maintenance, inspection, or replacement. The casing (107) serves as an enclosure to protect and house the rotor assembly (109) while maintaining the operational environment of the system.

At block 206, one or more tie rods (106) are positioned at the inner diameter and the outer diameter of the top plate (102) and the base plate (103). The tie rods (106) are used to connect the top plate (102) and the base plate (103) securely. The positioning of the tie rods (106) ensures structural stability and integrity, allowing the rotor (109) to function efficiently during operation. The tie rods (106) may include but not be limited to materials with high mechanical strength, capable of withstanding operational stresses.

In such embodiment, the rotor (109) rotates about the shaft (101) to achieve the desired operational effect, while the packing material enhances processes such as mass transfer or chemical reactions. The casing (107), with its detachable first portion (107-1), provides a practical and user-friendly design for accessing the rotor assembly (109). The integration of tie rods (106) at critical positions ensures a robust connection between the top plate (102) and the base plate (103), maintaining the system's structural integrity under operational conditions.

In the exemplary implementation of the embodiment, the method (200) may also include embedding the RPB system (100) within a chemical processing unit (600). The chemical processing unit (600) is designed as an integrated unit capable of performing one or more chemical reactions or processes. The integration allows the RPB system (100) to function efficiently as part of a larger chemical operation, enhancing the rate and effectiveness of chemical mixing and reaction processes.

In the exemplary implementation of the embodiment, the method (200) involves the structure of the one or more inner support rods (104) and the one or more outer support rods (105) are defined. The inner support rods (104) are implemented with a cylindrical cage structure, that provides both flexibility and stability to accommodate packing material (118) necessary for the operation of the RPB system (100). The outer support rods (105) are cylindrical in shape and positioned along the periphery surface of the top plate (102) and the base plate (103), offering further structural support to the system (100).

The method (200) provides a comprehensive approach to assembling and integrating the RPB system (100) within a chemical processing unit (600), ensuring that the system operates efficiently while maintaining structural stability. The method emphasizes the arrangement and alignment of key components such as the shaft (101), top plate (102), base plate (103), inner support rods (104), outer support rods (105), and tie rods (106), ensuring that the RPB system (100) is both durable and effective in supporting various chemical processes. Each step in the method (200) ensures efficient assembly, operation, and maintenance of the rotating packed bed system (100). The features, including the shaft (101), rotor (109), casing (107), and tie rods (106), contribute to the overall reliability and adaptability of the system for various industrial applications.

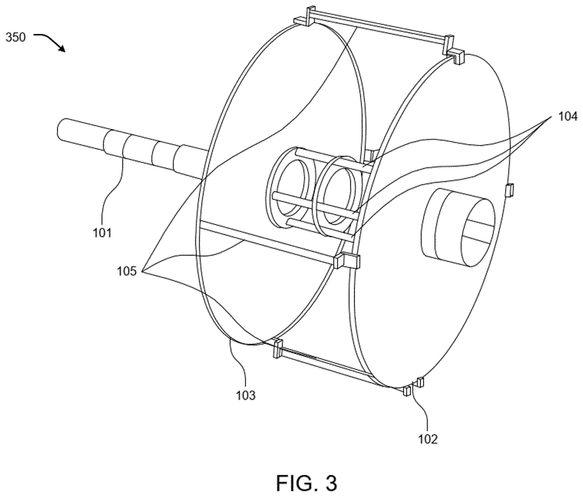

FIG. 3 illustrates an exemplary representation (350) of a RPB system (100) that includes a top plate (102) and a base plate (103) with one or more inner support rods (104) and one or more outer support rods (105), in accordance with an embodiment of the present disclosure.

Referring to FIG. 3, the rotating packed bed (RPB) system (100), which includes inner rotor support, outer rotor support, and guided tie rods, each specifically designed to ensure optimal process separation efficiency and maintain the alignment of key components such as the top plate (102), base plate (103), support rings, and the high surface area porous packing material. The design ensures that the gas flow between the top plate (102) and the base plate (103) is maintained, thus preserving the overall efficiency of the system.

In another embodiment of the present disclosure, the inner support rods (104) have a cylindrical cage structure, that includes three or more support rods held in place by circular rings. The circular rings ensure the concentricity of the entire system and contribute to maintaining the alignment of the top plate (102) and base plate (103) in the central region of the RPB system (100). This design allows for minimal interference with the gas-liquid flow patterns, ensuring that the flow remains consistent throughout the process. Additionally, the inner support rods (104) are spaced in such a manner that they maintain the distance between the top plate (102) and base plate (103) as per the specified design requirements. This prevents the packing material from becoming overstressed, thereby protecting it from damage during the operation of the RPB system (100).

In an exemplary representation of the embodiment, the outer support rods (105) are implemented to provide structural stability to the outer region of the RPB system (100). Similar to the inner support rods (104), the outer support rods (105) include three or more cylindrical rods that are positioned along the outer ring of the top plate (102) and base plate (103). The rods ensure the concentricity of the outer components and maintain the alignment of the top and base plates. The placement and design of the outer support rods (105) are such that they minimally interfere with the gas-liquid flow patterns, thus preserving the process separation efficiency. Moreover, the outer support rods (105) help maintain the distance between the top and base plates as per the design specifications, protecting the packing material from excessive stress and ensuring the proper functioning of the RPB system (100).

In the exemplary representation of the embodiment, the guided tie rods (106) of the RPB system (100), designed with varying diameters (stepped tie rods) that provide both mechanical strength and precision. The tie rods (106) are symmetrically placed within the rotor of the system to ensure dynamic balance during operation. The stepped design, with varying diameters near the top plate (102) and base plate (103), ensures that the distance between these plates is maintained according to design specifications. This feature also provides mechanical support to the packing material (118), preventing it from being subjected to compression stress during the assembly and operation of the RPB system (100). The larger diameter of the tie rods (106) offers increased strength, thereby enhancing the system's ability to withstand operational pressures. Additionally, the tie rods (106) ensure the concentricity of the overall structure, contributing to the stability and efficiency of the RPB system (100).

Through the combination of the inner support rods (104), outer support rods (105), and guided tie rods (106), the RPB system (100) maintains a stable and efficient design, allowing for optimal process separation. The specific arrangement and structure of each component ensure that the gas flow and alignment of the system are preserved, while also protecting the packing material (118) from stress and damage during operation. The design outlined in the present disclosure provides a comprehensive solution to enhancing the mechanical integrity and operational efficiency of the RPB system (100) within a chemical processing unit (600).

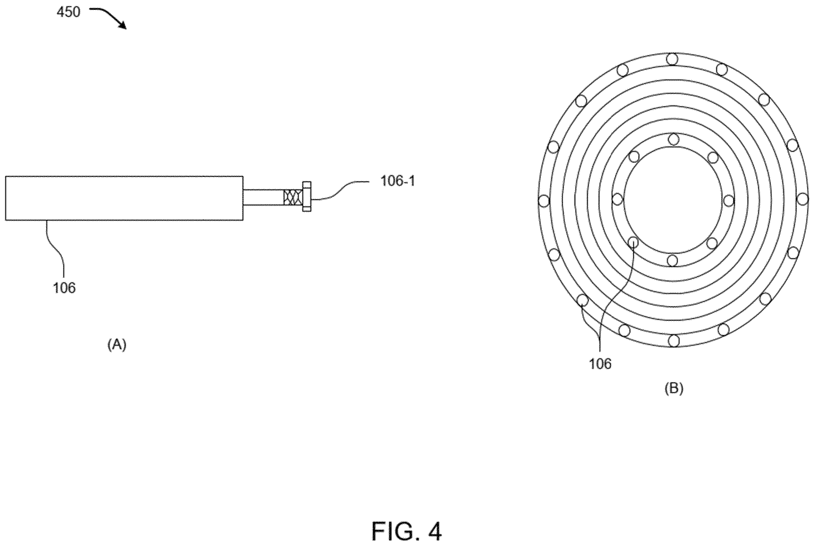

FIGs. 4 (A-B) illustrates exemplary representations (450) of the stepped tie rods (106) (A) and the strategic location of the stepped tie rods (106) (B), in accordance with an embodiment of the present disclosure.

In these embodiments, the stepped tie rods (106) ensure the mechanical stability and integrity of a rotating packed bed (RPB) system (100). The tie rods (106) are strategically positioned within the rotor to optimize dynamic balance, maintain structural alignment, and protect internal components such as packing materials from mechanical stress. The stepped tie rods (106) provide enhanced support by using varying diameters that offer strength and reduce the chances of deformation or misalignment during operation.

In these embodiments, the stepped tie rods (106) are symmetrically placed within the rotor (FIG. 4B). The symmetrical placement ensures dynamic balance, which is especially important in high-speed rotating systems like the RPB. By distributing the forces evenly across the rotor, the tie rods prevent any imbalance that could lead to vibrations or operational inefficiencies. The stepped tie rods are designed with increased diameters near the top plate (102) and base plate, which ensures that the distance between these plates is consistently maintained during operation.

In these embodiments, the stepped diameter of the tie rods also provides mechanical support to the packing material housed between the top and base plates of the RPB. During assembly, the packing material is subjected to compression stress, and without proper mechanical support, this could lead to deformation or damage. The stepped tie rods offer the necessary strength to prevent such stress-related issues, thereby protecting the packing material and ensuring its longevity and effectiveness in the separation process.

In these embodiments, the larger diameter of the tie rods provides additional strength to the overall structure. The larger cross-sectional area increases the load-bearing capacity of the rods, which is particularly important in high-pressure or large-capacity systems where mechanical stresses are more pronounced. By incorporating this design feature, the system is better equipped to handle operational stresses and reduces the likelihood of failure or the need for frequent maintenance.

In these embodiments, the concentricity of the rotor is maintained by the implementation of the stepped tie rods. By ensuring that the tie rods (106) are precisely positioned and properly aligned, the system maintains its concentricity, which is essential for the smooth operation of the RPB (100). Any deviation from concentricity could result in operational inefficiencies, including uneven flow distribution and potential damage to internal components. The stepped tie rods (106) ensure that the rotor remains properly aligned, and preserves the overall functionality and performance of the RPB system (100).

In these embodiments, the stepped tie rods (106) are marked at strategic locations to ensure that the mechanical balance and structural integrity of the system (100) are preserved. The normal tie rods, while not as robust as the stepped tie rods, serve to provide additional support and maintain the overall structural framework of the system.

In these embodiments, the stepped tie rods (106) have increased plate thickness ranges between and larger tie rods than conventional tie rods. The standard nut (106-1) is attached at one end of the stepped tie rods (106).

The structural changes in the stepped tie rods, with their symmetrically placed and stepped diameters, ensures dynamic balance, mechanical support, and concentricity within the RPB system. The improved tie rods protect the internal packing materials from compression stress, provide strength to withstand operational pressures, and ensure the smooth functioning of the system. The integration of both stepped and normal tie rods within the rotor provides a well-balanced and structurally sound solution for the mechanical challenges encountered in high-speed, high-capacity RPB system (100).

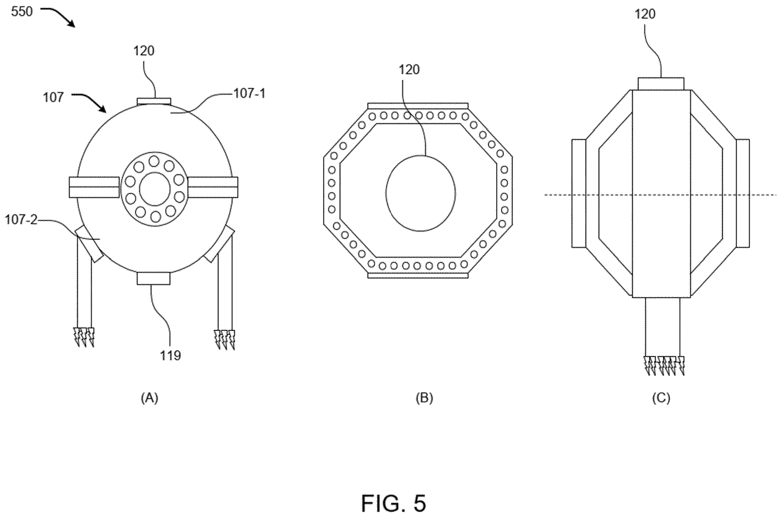

FIGs. 5 (A-C) illustrates exemplary representations (550) of the horizontal split-open configuration of the casing (107), in accordance with an embodiment of the present disclosure.

In yet another embodiment of the present disclosure, the disclosed horizontal split-open configuration introduces a horizontal split casing vessel that reduces material usage and improves ease of fabrication and maintenance. The split casing vessel includes a top and bottom casing that can be pivoted open, providing easy access to internal components of the RPB system (100) for inspection, repair, and maintenance.

In an exemplary implementation of the embodiment, the horizontal split casing is implemented with a curved surface at the process end that contains the RPB assembly. The curved surface is strategically designed to reduce the material thickness required for high-pressure operations, as curved surfaces are better suited for such applications compared to flat surfaces. Additionally, the design includes two conical surfaces, one at the drive end and another at the non-drive end. These conical surfaces provide structural support and are connected to the rest of the casing using flat circular plates. The circular flat plates connect both the top and bottom casings, ensuring a secure fit without the use of curved faces at the meeting or splitting surface.

In the exemplary implementation of the embodiment, the avoidance of curved faces at the meeting surface of the split casing is an important aspect of the design. It has been observed that curved faces at the meeting surface are more likely to fail under higher pressure conditions compared to flat surfaces. By incorporating flat surfaces at the meeting points, the split casing vessel ensures greater structural integrity and resistance to pressure, particularly in industrial applications requiring higher operating pressures.

In the exemplary implementation of the embodiment, the horizontal split casing (107) allows for faster fabrication due to its reduced material requirements and simplified structure. The split design also makes it possible to transport and install a larger RPB system (100) without the need for specialized equipment or excessive material handling. Moreover, the horizontal split casing vessel reduces the overall cost of production by minimizing material wastage and streamlining the fabrication process.

In the exemplary implementation of the embodiment, the horizontal split casing includes a gas inlet (120) positioned at the top and a liquid outlet (101) located at the lower side of the casing, ensures efficient flow of the gas-liquid mixture during operation. The liquid inlet (123) is also positioned for optimal distribution of liquid within the RPB system. The top view of the drawing shows the flat face connection by a circular plate, which ensures proper sealing and alignment of the top and bottom casings. The split position is clearly indicated in side view (FIG. 5C), highlighting the horizontal nature of the split, which facilitates easy access to the internal components of the system.

In yet another embodiment, the casing (107) is adapted to access the rotor assembly (109). The casing (107) includes a curved surface at the process end, a first conical surface at the drive end, and a second conical surface at non-drive end. Further, the casing (107) splits into a first (107-1) and a second (107-2) portion equally and adapted to pivot horizontally the first portion (107-1) of the casing (107) thereby accessing the rotor assembly (109) of the RPB system (100).

In such embodiment, the process end refers to the working end where the primary process (such as fluid or gas flow, chemical reactions, etc.) takes place. It can also be referred to as the inlet side or operational end depending on the type of process being handled. The drive end refers to the end of the equipment where the mechanical or electrical power is applied to drive the rotor or shaft. It's commonly referred to as the power end, motor end, or input shaft end in mechanical systems. Further, the non-drive end refers to as the free end, as it doesn't include any direct connection to the drive mechanism within the RPB system (100).

The disclosed horizontal split-open structure for the RPB casing (107) provides a practical solution to the challenges posed by conventional cylindrical vessel designs. It reduces material usage, simplifies fabrication, and improves accessibility for maintenance and inspection, making it a suitable option for larger RPB systems operating under high pressure or in environments containing impurities. The design ensures the structural integrity of the system while allowing for efficient operation and maintenance.

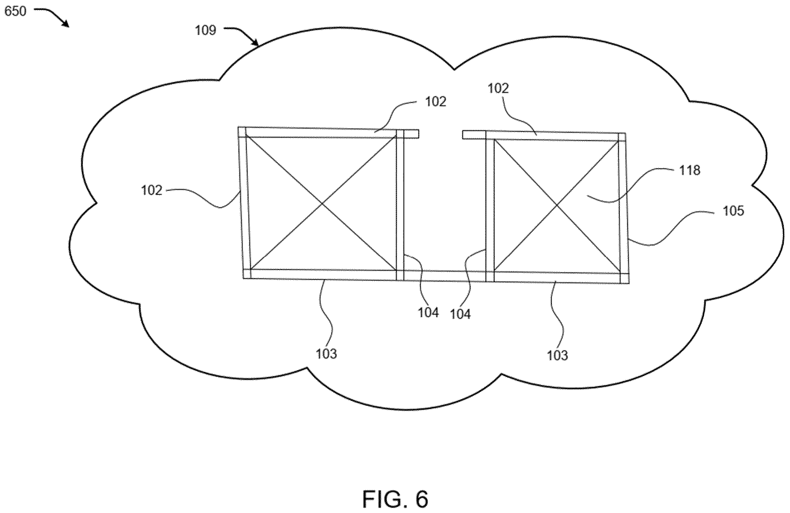

FIG. 6 illustrates an exemplary representation of side view (650) of RPB assembly, in accordance with an embodiment of the present disclosure.

Referring to FIG. 6, the RPB assembly includes the top plate (102), base plate (103), inner support rods (104), outer support rods (105), and packing is placed in between the top plate and bottom plate.

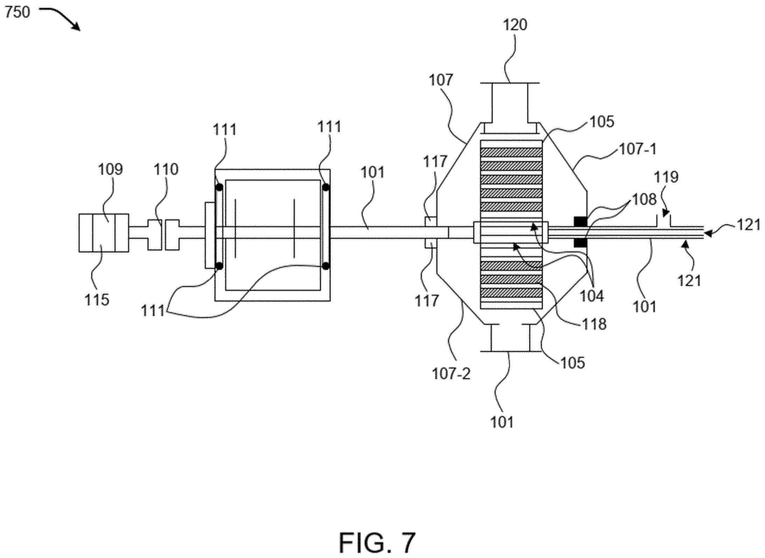

FIG. 7 illustrates an exemplary overview (750) of the rotating packed bed (RPB) with its components, in accordance with an embodiment of the present disclosure.

Referring to FIG. 7, the RPB (101) comprises an RPB unit and a motor (115). The RPB (101) facilitates mass transfer between a liquid and a gas. The RPB (101) includes a rotating shaft (103) and a rotor (109). The rotating shaft (103) may be a low-weight metallic hollow drive shaft. The rotor (109) includes one or more sets of concentric rings of packing elements (118), stacked together in a manner as shown in the FIG. 7.

In yet another embodiment of the present disclosure, a liquid inlet (119) and gas outlet (121) assembly (130) may be provided for facilitating the inflow of liquid into the rotor (109) and the exit of gas from the rotor (109). The liquid inlet (119) and gas outlet (121) may be connected to the rotor (109) through the gap (114). The liquid inlet (119) and gas outlet pipe (121) may comprise a central hollow pipe, hereinafter referred to as the gas outlet (121), which allows the gas to exit from the rotor (109) due to a pressure differential. Surrounding the gas outlet (121) is a liquid inlet (119) for facilitating the inflow of the liquid. The liquid enters the rotor (109) through the annular space between the gas outlet (121) and the liquid inlet (119). The liquid inlet (119) and gas outlet (121) assembly (130) further comprises one or more liquid distributor assemblies (122) connected to the liquid inlet (119) for distributing the liquid inside the rotor (109). Each of the liquid distributor assemblies (122) comprises one or more nozzles through which the liquid may be distributed inside the rotor (109). In an example, the nozzles may be full cone spray nozzles.

One end of the shaft (103) may be connected to the motor (115) through one or more removable couplings (110). The removable couplings (110) may also be referred to as the couplers (110). The motor (115) facilitates the rotation of the shaft (103) and thereby the rotation of the rotor (109). In an example, a variable frequency drive (VFD) (109) may be provided for controlling the speed of the motor (115). The shaft may have a plurality of sequential steps on the outer surface for facilitating the mounting of a bearing housing (111) onto the shaft (103). The bearing housing (111) comprises one or more ball bearings housed in the bearing housing (111) for countering the axial and radial loads of the rotor (109), which has a cantilever arrangement. The bearing housing (111) may further include one or more mechanical seals (117). In an example, the mechanical seals (117) may be connected to the rotating shaft (103) and the rotor vessel (116) for averting any leakage of liquid and gas from inside the rotor vessel (116) to the outside environment. The mechanical seals (117) may also be equipped with lubricant and cooling water circulation mechanisms and a trip logic to trigger an alarm in case of any leakage.

The rotor (109) further includes one or more metallic plates, hereinafter individually referred to as the base metallic plate (112) and the top metallic plate (113). The metallic plates may be circular in shape. The metallic plates, the sets of concentric rings, and the metallic rings may be stacked together using a plurality of fasteners, such as tie-rods. The top metallic plate (112) may have a gap for facilitating the inflow of liquid and the outflow of gas. The rotor (109) may be housed inside a rotor vessel (116). Additionally, the disengagement plate (114) helps separate the gas and liquid streams after they pass through the rotating packed bed (101), preventing intermixing of the phases at the outlets.

The outer support rod (105) provides mechanical support to the rotor assembly (106) by securing the packing material and ensuring it remains in place during high-speed rotation. The outer support rod (105) helps prevent deformation or movement of the packing under the centrifugal forces generated by the rotor (109). The split casing (107) surrounds the rotor assembly (106), packing material, and other internal components, forming a protective barrier between the rotating parts and the external environment. The split casing (107) ensures containment of the gas and liquid phases within the system, preventing leaks. The horizontal split casing (107) allows the casing to be easily opened, simplifying inspection, cleaning, and replacement of internal components such as packing material, rods, or seals. Further, an inner support rod (104) located closer to the center of the rotor supports the inner boundary of the RPB packing material. The inner support rod (104) ensures that the packing remains correctly aligned at the rotor's inner edge. Said rod (104) distributes the mechanical load from the inner portion of the packing, preventing collapse or distortion due to centrifugal forces and providing stability to the packing material near the shaft area, ensuring smooth rotation and preventing vibrations or wobbling.

The liquid distributor assembly (122) is positioned near the liquid inlet (119). The liquid distributor assembly (122) feeds liquid into the RPB packing elements (118) with the help of both inner support rods (104) and outer support rods (105), ensuring that the liquid is spread uniformly as it moves outward due to centrifugal forces. By ensuring uniform liquid distribution, the liquid distributor assembly (122) enhances the efficiency of the RPB (101) system, leading to better mass transfer rates and lower energy consumption. The liquid distributor assembly (122) may adapt to various operational scales and applications, such as chemical absorption, distillation, or gas scrubbing.

The gas may be introduced inside the rotor vessel (116) through a gas inlet (120) provided in the rotor vessel (116). In an example, the gas may be forced radially inward to the rotor (109). The gas may be distributed inside the vessel in a homogenous manner by using a gas impingement plate. The gas impingement plate may be made of metal and may have one or more holes on its surface. The gas impingement plate may be provided on the inner surface of the rotor vessel (116) and may be suitably aligned with the gas inlet (120).

The liquid is introduced into the rotor (109) through the liquid distributor assembly (122). The motor (115) rotates the shaft (103), either in a clockwise or anti-clockwise direction, and thereby, in turn, rotates the rotor (109). The gas and the liquid interact with each other over the surface of the packing elements (118), and mass transfer occurs between the two.

Due to the centrifugal acceleration produced by the rotation of the rotor (109), the liquid is driven radially outwards of the rotor (109). Further, the gas exits the rotor (109) through the gas outlet (121).

In these embodiments, the detailed features of the roller assembly (108) provide an efficient, low-maintenance solution for supporting rotating machinery, ensuring smooth rotation, balanced load distribution, and protection against environmental factors that may otherwise affect the longevity and performance of the system.

What are described above are merely preferred embodiments of the present disclosure, and are not to limit the present disclosure. Any modification, equivalent replacement, and improvement within the principle of the present disclosure should be included in the protection scope of the present disclosure.

References back that are used in dependent claims indicate the further embodiment of the subject matter of the main claim by way of the features of the respective dependent claim; they should not be understood as dispensing with obtaining independent protection of the subject matter for the combinations of features in the referred-back dependent claims. Furthermore, with regard to interpreting the claims, where a feature is concretized in more specific detail in a subordinate claim, it should be assumed that such a restriction is not present in the respective preceding claims.

Since the subject matter of the dependent claims in relation to the prior art on the priority date may form separate and independent disclosures, the applicant reserves the right to make them the subject matter of independent claims or divisional declarations. They may furthermore also contain independent disclosures that have a configuration that is independent of the subject matters of the preceding dependent claims.

Further, elements and/or features of different example embodiments may be combined with each other and/or substituted for each other within the scope of this disclosure and appended claims.

### ADVANTAGES OF THE DISCLOSURE:

A general advantage of the present disclosure provides a rotating packed bed system with modified mechanical supports and casing and a method implementing thereof.

The proposed disclosure provides enhanced accessibility of the RPB internals with pivoting casing in the RPB system for maintenance.

The proposed disclosure provides a rotating packed bed (RPB) system and a method that provides structural stability provided by cylindrical inner and outer support rods and stepped tie rods.

The proposed disclosure provides a RPB system that enables flexible integration into chemical processing units for diverse applications.

The proposed disclosure provides an RPB system and a method that is adaptable for various internal components with the modified casing that supports efficient chemical processes.

## Claims

1. A rotating packed bed (RPB) system (100) comprising:
a shaft (101) connected a rotor (109) having a top plate (102) and a base plate (103), wherein the top plate (102) and the base plate (103) are positioned parallel to each other and are separated to place a packing material (118);
a casing (107) adapted to house the rotor assembly (109) positioned therein, wherein the casing splits into a first portion (107-1) and a second portion (107-2) equally and adapted to pivot horizontally such that the first portion (107-1) of the casing (107) is detachable to access the rotor assembly (109) positioned therein; and
one or more tie rods (106) being positioned at an inner diameter and an outer diameter of the top plate (102) and the base plate (103) to connect the top plate (102) and the base plate (103).

2. The RPB system as claimed in claim 1, wherein the RPB system (100) comprises:
one or more inner support rods (104) are positioned between the top plate (102) and the base plate (103); and
one or more outer support rods (105) are positioned on a periphery surface of each of the top plate (102) and the base plate (103).

3. The RPB system (100) as claimed in any of the preceding claims, wherein the one or more tie rods (106) are one or more stepped tie rods.

4. The RPB system (100) as claimed in any of the preceding claims, wherein the RPB system (100) is embedded in a chemical processing unit (600), wherein the chemical processing unit (600) is an integrated unit adapted to perform one or more chemical reactions or one or more chemical processes.

5. The RPB system (100) as claimed in any of the preceding claims, wherein the one or more inner support rods (104) having a cylindrical cage structure, and the one or more outer support rods (105) having a cylindrical shape.

6. The RPB system (100) as claimed in any of the preceding claims, wherein the one or more tie rods (106) are positioned at a predetermined distance from each other.

7. The RPB system (100) as claimed in any of the preceding claims, wherein the one or more tie rods are one or more tie rods (106) are stepped tie rods with varying diameter.

8. A method (200) comprising:
connecting (201) a shaft (101) to a rotor (109) having a top plate (102) and a base plate (103), wherein the top plate (102) and the base plate (103) are positioned parallel to each other and are separated to place a packing material;
adapting (202) a casing (107) to house rotor assembly (109) positioned therein, wherein the casing splits into a first portion (107-1) and a second portion (107-2) portions equally and adapted to pivot horizontally such that the first portion (107-1) of the casing (107) is detachable to access the rotor assembly (109) positioned therein; and
positioning (203) one or more tie rods (106) at an inner diameter and an outer diameter of the top plate (102) and the base plate (103) to connect the top plate (102) and the base plate (103).

9. The method (200) as claimed in claim 8, wherein the RPB system (100) is embedded in a chemical processing unit (600), wherein the chemical processing unit (600) is an integrated unit adapted to perform one or more chemical reactions or one or more chemical processes.

10. The method (200) as claimed in any of claims 8 or 9, wherein the one or more inner support rods (104) having a cylindrical cage structure, and the one or more outer support rods (105) having a cylindrical shape.
